(19) Europäisches Patentamt
European Patent Office
Office européen des brevets

(11) **EP 4 403 256 A1**

(12) **EUROPEAN PATENT APPLICATION**
published in accordance with Art. 153(4) EPC

(43) Date of publication:
**24.07.2024 Bulletin 2024/30**

(21) Application number: **22883404.0**

(22) Date of filing: **11.10.2022**

(51) International Patent Classification (IPC):
**B01J 20/10** (2006.01)    **B01D 53/14** (2006.01)
**C01B 32/50** (2017.01)    **C01B 33/24** (2006.01)

(52) Cooperative Patent Classification (CPC):
**B01D 53/14; B01J 20/10; C01B 32/50; C01B 33/24**

(86) International application number:
**PCT/JP2022/037817**

(87) International publication number:
**WO 2023/068100 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2021 JP 2021171812**

(71) Applicant: **Denka Company Limited**
**Tokyo 103-8338 (JP)**

(72) Inventors:
- **SHIMAZAKI, Daiki**
  **Tokyo 103-8338 (JP)**
- **MORI, Taiichiro**
  **Tokyo 103-8338 (JP)**
- **YASUDA, Ryosuke**
  **Tokyo 103-8338 (JP)**

(74) Representative: **Ter Meer Steinmeister & Partner Patentanwälte mbB**
**Nymphenburger Straße 4**
**80335 München (DE)**

(54) **CO2 IMMOBILIZATION MATERIAL AND METHOD FOR PRODUCING CO2 IMMOBILIZATION PRODUCT**

(57) There are provided a $CO_2$ immobilization material including one kind or two or more kinds of non-hydraulic compound selected from the group consisting of $\gamma\text{-}2CaO\cdot SiO_2$, $3CaO\cdot 2SiO_2$, $\alpha\text{-}CaO\cdot SiO_2$, and calcium magnesium silicate, in which the $CO_2$ immobilization material contains Li, and a content percentage of the Li is 0.001 to 1.0% by mass in terms of oxide; and a method for producing a $CO_2$ immobilization product including subjecting the $CO_2$ immobilization material to a carbonation treatment at 75°C or lower and/or 50% RH or higher.

EP 4 403 256 A1

**Description**

Technical Field

The present invention relates to a $CO_2$ immobilization material and a method for producing a $CO_2$ immobilization product.

Background Art

As an approach for reducing greenhouse gases, concrete products in which $CO_2$ is forcibly absorbed or carbonated at the time of production (hereinafter referred to as $CO_2$ absorption concrete) have been partially put into practical use. $CO_2$ absorption concrete, which is a kind of CCUS technology (abbreviation of Carbon dioxide Capture, Utilization and Storage and is a collection and storage technology for carbon dioxide), is also referred to in "Roadmap for Carbon Recycling Technology" announced by the Ministry of Economy, Trade and Industry in 2019, and technology development for widespread use is being conducted.

PTL 1 discloses a method for forcibly absorbing or carbonating $CO_2$ during the production of concrete. Specifically, there is disclosed a method for immobilizing carbon dioxide, including a contact step of bringing the gas containing carbon dioxide into contact with a hardened cementitious material to immobilize carbon dioxide contained in the gas containing carbon dioxide in the hardened cementitious material.

Citation List

Patent Literature

PTL 1: JP 2020-15659A

Summary of Invention

Technical Problem

However, in the immobilization method of PTL 1, the amount of water in the gas containing carbon dioxide is set to 1.5% or more, and the temperature is set to 75 to 175°C, and there is no disclosure or suggestion of a material for immobilizing $CO_2$.

In view of the above, an object of the present invention is to provide a $CO_2$ immobilization material capable of immobilizing $CO_2$ by carbonation treatment and a method for producing a $CO_2$ immobilization product.

Solution to Problem

As a result of intensive studies to solve the above problem, the present inventors have arrived at the following present invention and found that the problem can be solved. That is, the present invention is as follows.

[1] A $CO_2$ immobilization material including one kind or two or more kinds of non-hydraulic compound selected from the group consisting of $\gamma$-$2CaO \cdot SiO_2$, $3CaO \cdot 2SiO_2$, $\alpha$-$CaO \cdot SiO_2$, and calcium magnesium silicate, in which the $CO_2$ immobilization material contains Li, and a content percentage of the Li is 0.001 to 1.0% by mass in terms of oxide.

[2] A $CO_2$ immobilization material including one kind or two or more kinds of non-hydraulic compound selected from the group consisting of $\gamma$-$2CaO \cdot SiO_2$, $3CaO \cdot 2SiO_2$, $\alpha$-$CaO \cdot SiO_2$, and calcium magnesium silicate, and a disaccharide.

[3] The $CO_2$ immobilization material according to [1] or [2], in which a molar ratio of $CaO/SiO_2$ in the non-hydraulic compound is 0.8 to 2.3.

[4] The $CO_2$ immobilization material according to [1], further including a disaccharide.

[5] The $CO_2$ immobilization material according to any of [1], [2], and [4], in which the disaccharide is contained in an amount of 0.5 to 10 parts by mass with respect to 100 parts by mass of the $CO_2$ immobilization material.

[6] The $CO_2$ immobilization material according to any of [1], [2], [4], and [5], in which the disaccharide includes trehalose.

[7] A method for producing a $CO_2$ immobilization product, including subjecting the $CO_2$ immobilization material according to any of [1] to [6] to a carbonation treatment at 75°C or lower and/or 50% RH or higher.

Advantageous Effects of Invention

According to the present invention, it is possible to provide a $CO_2$ immobilization material capable of immobilizing $CO_2$ by carbonation treatment and a method for producing a $CO_2$ immobilization product.

Description of Embodiments

[$CO_2$ Immobilization Material]

Examples of the $CO_2$ immobilization material according to the embodiment of the present invention include a first $CO_2$ immobilization material and a second $CO_2$ immobilization material.

<First $CO_2$ Immobilization Material>

The first $CO_2$ immobilization material includes one kind or two or more kinds of non-hydraulic compound selected from the group consisting of $\gamma$-$2CaO \cdot SiO_2$, $3CaO \cdot 2SiO_2$, $\alpha$-$CaO \cdot SiO_2$, and calcium magnesium silicate. The first $CO_2$ immobilization material further contains Li in the $CO_2$ immobilization material, and a content thereof is 0.001 to 1.0% in terms of oxide. It is presumed that the predetermined amount of Li promotes the generation of vaterite, which is one kind of calcium carbonate, in the carbonation of C-S-H (calcium silicate hydrate), and it is considered that a denser hardened state is easily obtained by carbonation (salt) curing.
Here, "$CO_2$ immobilization material contains Li" refers to a state in which the non-hydraulic compound in the $CO_2$ immobilization material contains $Li_2O$ as a chemical composition (the presence can be confirmed by ICP emission spectrometric analysis), but $Li_2O$ is not identified by X-ray diffraction measurement (a clear peak of $Li_2O$ is not observed), and simply refers to a state in which the non-hydraulic compound and the Li compound are not physically mixed. Such a state can be obtained by mixing the respective raw materials and heat-treating the mixture at a high temperature of 1,000°C or more. Hereinafter, each component and the like are described.

($\gamma$-$2CaO \cdot SiO_2$)

$\gamma$-$2CaO \cdot SiO_2$ is known as a low temperature phase among the compounds represented by $2CaO \cdot SiO_2$, and is completely different from $\alpha$-$2CaO \cdot SiO_2$, $\alpha'$-$2CaO \cdot SiO_2$, and $\beta$-$2CaO \cdot SiO_2$, which are high temperature phases. These are each represented by $2CaO \cdot SiO_2$, but have different crystal structures and densities.

($3CaO \cdot 2SiO_2$)

$3CaO \cdot 2SiO_2$ is a mineral containing CaO in pseudo-wollastonite and is called rankinite. It has no hydration activity and is a chemically stable mineral, but has a large $CO_2$ immobilization effect.

($\alpha$-$CaO \cdot SiO_2$)

$\alpha$-$CaO \cdot SiO_2$ ($\alpha$-type wollastonite) is known as a high temperature phase among compounds represented by $CaO \cdot SiO_2$, and is completely different from $\beta$-$CaO \cdot SiO_2$ which is a low temperature phase. These are each represented by $CaO \cdot SiO_2$, but have different crystal structures and densities.
Naturally produced wollastonite is a low temperature phase $\beta$-$CaO \cdot SiO_2$. $\beta$-$CaO \cdot SiO_2$ has a needle-like crystal and is used as an inorganic fibrous substance such as wollastonite fiber, but does not have a $CO_2$ immobilization effect like $\alpha$-$CaO \cdot SiO_2$ according to the present embodiment.

(Calcium Magnesium Silicate)

Calcium magnesium silicate is a general name for $CaO$-$MgO$-$SiO_2$-based compounds, but in the present embodiment, it is preferably merwinite (Merwinite) represented by $3CaO \cdot MgO \cdot 2SiO_2(C_3MS_2)$, and a large $CO_2$ immobilization effect is achieved by merwinite.
The non-hydraulic compound as described above can be one kind or two or more kinds, but the content percentage of Li in the non-hydraulic compound (in a case in which there is a plurality of kinds, the total thereof) is 0.001 to 1.0%, preferably 0.005 to 1.0%, more preferably 0.010 to 0.90%, and still more preferably 0.015 to 0.80%, in terms of oxide. When the content percentage of Li is less than 0.001% in terms of oxide, the carbonation promoting effect cannot be obtained. When it is over 1.0%, the cost is high. The content percentage of Li in terms of oxide can be measured by a method described in Examples.

Among the non-hydraulic compounds, $\gamma$-$2CaO \cdot SiO_2$ is particularly preferable in that less energy for pulverization is required compared to other compounds since it is accompanied with a powdering phenomenon called dusting at the time of production, and a $CO_2$ immobilization effect is large over a long period of time.

The non-hydraulic compound according to the present embodiment is obtained by blending a CaO raw material, a $SiO_2$ raw material, a MgO raw material, and a Li raw material at a predetermined molar ratio and then heat-treating. Examples of the CaO raw material include calcium carbonate such as limestone, calcium hydroxide such as slaked lime, by-produced slaked lime such as acetylene by-produced slaked lime, fine powder generated from waste concrete mass, concrete sludge (dehydrated cake) generated at a ready-mixed concrete factory and a concrete product factory, incineration ash (such as coal ash, woody biomass, incineration ash of municipal waste and incineration ash of sewerage sludge), and steel slag (such as converter slag, and electric furnace slag). Examples of the $SiO_2$ raw material include silica stone and clay, and further include various siliceous dusts generated as industrial by-products represented by silica fume and fly ash. Examples of the MgO raw material include magnesium hydroxide, basic calcium carbonate, and dolomite. In addition, examples of the Li raw material include lithium carbonate. Note that when Li is contained in the CaO raw material, the $SiO_2$ raw material or the MgO raw material, it is not necessary to newly add a Li raw material. One kind or two or more kinds selected from industrial by-products containing CaO, such as by-produced slaked lime, fine powder generated from waste concrete mass, concrete sludge, incineration ash of municipal waste and incineration ash of sewerage sludge, can be used also from the viewpoint of reducing the amount of non-energy-derived $CO_2$ emission during heat treatment. Among them, it is more preferable to use a by-produced slaked lime having a smaller amount of impurities compared to other industrial by-products.

Examples of the by-produced slaked lime include acetylene-by-produced slaked lime such as by-produced slaked lime by-produced in a step of producing acetylene gas by a calcium-carbide method (there are a wet product and a dry product based on the difference in the method of producing acetylene gas); and by-produced slaked lime contained in dust captured in a wet dust collection step in a calcium-carbide electric furnace. The by-produced slaked lime contains, for example, 65 to 95% (preferably 70 to 90%) of calcium hydroxide, and in addition thereto, contains 1 to 10% of calcium carbonate and 0.1 to 6.0% (preferably 0.1 to 3.0%) of iron oxide. These proportions can be confirmed by a mass decrease ($Ca(OH)_2$: around 405°C to 515°C, $CaCO_3$: around 650°C to 765°C) obtained by fluorescent X-ray measurement and thermogravimetric differential thermal analysis (TG-DTA). A volume-average particle size measured by a laser diffraction-scattering method is about 50 to 100 $\mu$m. Further, a water content percentage measured by a loss on drying method in JIS K 0068 "Methods for measuring water content of chemical products" is preferably 10% or less. Further, a sulfur compound such as CaS, $Al_2S_3$, and $CaC_2 \cdot CaS$ can be contained, but it is preferably 2% or less.

The above-described heat treatment at a high temperature of 1,000°C or higher is not particularly limited, but can be performed by, for example, a rotary kiln or an electric furnace. The heat treatment temperature is not uniquely defined, but the heat treatment is usually performed in a range of about 1,000 to 1,800°C, and is often performed in a range of about 1,200 to 1,600°C.

In the present embodiment, an industrial by-product containing the above-described non-hydraulic compound can also be used. At this time, an impurity coexists. Examples of such industrial by-products include steel slag.

There is a case in which an impurity is contained in the CaO raw material, the $SiO_2$ raw material, or the MgO raw material, but this is not particularly a problem as long as the effect of the present invention is not impaired. Specific examples of the impurity include $Al_2O_3$, $Fe_2O_3$, $TiO_2$, MnO, $Na_2O$, $K_2O$, S, $P_2O_5$, F, $B_2O_3$, and chloride. Further, examples of the coexisting compound include free calcium oxide, calcium hydroxide, calcium aluminate, calcium aluminosilicate, calcium ferrite, calcium aluminoferrite, calcium phosphates, calcium borate, magnesium silicate, leucite ($K_2O$, $Na_2O) \cdot Al_2O_3 \cdot SiO_2$, spinel $MgO \cdot Al_2O_3$, magnetite $Fe_3O_4$, and the above-described sulfur compound such as CaS, $Al_2S_3$, and $CaC_2 \cdot CaS$.

Among these impurities, a content percentage of S (sulfur) in the non-hydraulic compound is preferably 1.0% or less, more preferably 0.7% or less, and still more preferably 0.5% or less, in terms of oxide ($SO_3$). By being 1.0% or less, a sufficient carbonation (salt) promoting effect can be obtained, and condensation and a curing property can be set to be in appropriate ranges. The content percentage of S in terms of oxide ($SO_3$) can be measured by fluorescent X-ray measurement. Note that S (sulfur) in the non-hydraulic compound can be present as long as it is about 2% in terms of oxide.

In the immobilization material, a content percentage of the non-hydraulic compound (the content percentage in the total amount in a case in which a plurality of kinds is contained) is preferably 65% or more, more preferably 70% or more, and still more preferably 75% or more. Note that hydraulic $2CaO \cdot SiO_2$ other than $\gamma$-$2CaO \cdot SiO_2$ can also be mixed, and can be mixed up to 35% at a maximum.

A content percentage of $\gamma$-$2CaO \cdot SiO_2$ in the non-hydraulic compound is preferably 35% or more, and more preferably 45% or more. Further, the upper limit of the content percentage of $\gamma$-$2CaO \cdot SiO_2$ is not particularly limited. Among steel slag, electric furnace reduction period slag or stainless slag having a high content percentage of $\gamma$-$2CaO \cdot SiO_2$ is preferable.

A molar ratio of $CaO/SiO_2$ in the non-hydraulic compound is preferably 0.8 to 2.3, and more preferably 1.2 to 2.3. When the molar ratio is from 0.8 to 2.3, carbonation can be further promoted.

In addition, the immobilization material preferably contains, as chemical components, 0.001 to 1.0 parts of $Li_2O$, 45 to 70 parts of CaO, 30 to 55 parts of $SiO_2$, and 0 to 10 parts of $Al_2O_3$, in 100 parts of the $CO_2$ immobilization material, from the viewpoint of more easily exhibiting the effect thereof. A content of $Li_2O$ can be measured by a method described in Examples below. Further, CaO, $SiO_2$ and $Al_2O_3$ can be measured by fluorescent X-rays.

As the chemical components, it is more preferable that 0.002 to 0.5 parts of $Li_2O$, 60 to 70 parts of CaO, 30 to 45 parts of $SiO_2$, and 0.5 to 5 parts of $Al_2O_3$ are contained in 100 parts of the $CO_2$ immobilization material.

Furthermore, as the chemical components, the total of $Li_2O$, CaO, $SiO_2$, and $Al_2O_3$ is preferably 90 parts or more, and more preferably 95 to 100 parts, in 100 parts of the $CO_2$ immobilization material.

Examples of a method for quantifying the non-hydraulic compound in the immobilization material include a Rietveld method by a powder X-ray diffraction method.

A water content percentage of the $CO_2$ immobilization material is preferably 10% by mass or less, and more preferably 0.01 to 10% by mass, in order to maintain adequate contact between a surface of the non-hydraulic compound and the gas containing carbon dioxide.

This can be determined from the difference between the mass of the sample before drying and the mass after drying by heating at 105°C. Further, the water content percentage of the $CO_2$ immobilization material can be adjusted by heating and drying at 105°C, and then adding an appropriate amount of water and stirring.

An average particle diameter of the $CO_2$ immobilization material is preferably 1 to 100 $\mu$m, and more preferably 1 to 70 $\mu$m. When the average particle diameter is 1 to 70 $\mu$m, the elution of Ca to the particle-surface water can be promoted, and the carbonation reaction can be promoted. The average particle diameter can be determined by measurement with a laser diffraction/scattering particle size distribution measuring device.

Further, a Blaine specific surface area of the $CO_2$ immobilization material (particularly in a case of utilizing $\gamma$-$2CaO \cdot SiO_2$) is preferably 1,000 to 10,000 $cm^2$/g, and more preferably 2,500 to 10,000 $cm^2$/g. When the specific surface area is 2,500 to 10,000 $cm^2$/g, the contact area of the particle with particle-surface water is increased, and the elution of Ca is promoted, whereby the carbonation reaction can be promoted. The specific surface area can be obtained by measurement with a Blaine air permeation device described in JIS R 5201.

Further, the $CO_2$ immobilization material preferably contains disaccharides such as trehalose, maltose, and sucrose in order to form a chelate with Ca eluted in the particle-surface water and promote further elution. In particular, it is more preferable that trehalose, which has a high effect of promoting the carbonation reaction, is contained.

From the viewpoint of the effect of promoting the carbonation reaction, the disaccharide is contained in an amount of preferably 0.5 to 10 parts by mass, and more preferably 5 to 10 parts by mass, with respect to 100 parts by mass of the non-hydraulic compound. Further, in order to obtain a sufficient carbonation promoting effect, the content of trehalose in the disaccharide is preferably 90% by mass or more, and more preferably 95% by mass or more.

Here, the immobilization of the $CO_2$ means that the material is carbonated and the $CO_2$ forms a carbonate compound with the material. Here, a carbonation rate can be determined as follows as a proportion of CaO components in the $CO_2$ immobilization material to $CO_2$ to be theoretically immobilized.

$$\text{Formula (1): Carbonation rate} = (\Delta M \times 56.08)/(M \times w_{CaO} \times 44.01)$$

Here, $\Delta M$: an increased mass [g] by carbonation, M: a mass [g] of the $CO_2$ immobilization material before carbonation, and $w_{CaO}$: CaO [wt%] in the $CO_2$ immobilization material before carbonation

In the above formula, the increased mass due to carbonation refers to the mass obtained by subtracting the sample weight before carbonation from the sample weight after carbonation. CaO in the $CO_2$ immobilization material before carbonation can be measured by fluorescent X-ray analysis.

<Second $CO_2$ Immobilization Material>

The second $CO_2$ immobilization material contains one kind or two or more kinds of non-hydraulic compound selected from the group consisting of $\gamma$-$2CaO \cdot SiO_2$, $3CaO \cdot 2SiO_2$, $\alpha$-$CaO \cdot SiO_2$, and calcium magnesium silicate, and a disaccharide.

Disaccharides such as trehalose, maltose, and sucrose form a chelate with Ca eluted in the water on the surface of the $CO_2$ immobilization material particle and promote further elution, whereby the effect of promoting the carbonation reaction can be enhanced. From the viewpoint of further enhancing the effect of promoting the carbonation reaction, it is preferable that trehalose is contained.

As described above, since the second $CO_2$ immobilization material contains a disaccharide, $CO_2$ can be immobilized by carbonation treatment even when the $CO_2$ immobilization material does not contain a predetermined amount of Li, unlike the first $CO_2$ immobilization material.

Note that as long as the second $CO_2$ immobilization material essentially contains a non-hydraulic compound and a disaccharide, the configuration and preferable embodiments of the first $CO_2$ immobilization material can be appropriately adopted.

[Method for Producing $CO_2$ Immobilization Product]

The method for producing a $CO_2$ immobilization product according to the present invention is a method for carbonating a $CO_2$ immobilization material at 75°C or lower and/or 50% RH or higher.

The method of the carbonation treatment is not particularly limited, and examples thereof include a method of performing a treatment by appropriately heating and/or humidifying (adding water) so as to be 75°C or lower and/or 50% RH or higher in an atmosphere of the gas containing carbon dioxide.

The temperature of the carbonation treatment is preferably 5 to 75°C, and more preferably 5 to 50°C. Further, the relative humidity is preferably 50 to 100% RH, and more preferably 90 to 100% RH.

As the gas containing carbon dioxide, an exhaust gas generated from a cement factory and a coal-fired power plant, an exhaust gas generated by exhaust treatment in a coating factory, or the like can be used. The proportion of carbon dioxide in the gas containing carbon dioxide is preferably 5% by volume or more, more preferably 10% by volume or more, and still more preferably 15% by volume or more.

The gas containing carbon dioxide can contain moisture (water vapor).

The $CO_2$ immobilization product thus produced can be used, for example, as a cement additive, or can be used as a material for an aggregates for mortar or concrete, a roadbed material, a banking material, a backfill material, and the like. That is, not only carbon dioxide in the atmosphere can be effectively immobilized on the $CO_2$ immobilization material, but also it can be more effectively utilized as a concrete material.

Examples

Hereinafter, the present invention is described in more detail with reference to Examples and Comparative Examples, but the present invention is not limited to the following Examples as long as it does not depart from the gist thereof. Note that the $CO_2$ immobilization material can be simply referred to as an "immobilization material".

[Experimental Example 1]

$CO_2$ immobilization materials A to F were prepared as described below.

$CO_2$ immobilization material A: $\gamma$-2CaO·SiO$_2$. Calcium carbonate with reagent grade 1 and silicon dioxide with reagent grade 1 were mixed at a molar ratio of 2:1, lithium carbonate with reagent grade 1 was further mixed such that the content of Li is 0.1% (internal replacement) in terms of oxide (Li$_2$O) with respect to the mixture, and the mixture was heat-treated at 1,400°C for 2 hours and allowed to stand to room temperature to prepare a $CO_2$ immobilization material A having a Blaine specific surface area of 4,000 cm$^2$/g.

$CO_2$ immobilization material B: 3CaO·2SiO$_2$. Calcium carbonate with reagent grade 1 and silicon dioxide with reagent grade 1 were mixed at a molar ratio of 3:2, lithium carbonate with reagent grade 1 was further mixed such that the content of Li was 0.1% (internal replacement) in terms of oxide (Li$_2$O) with respect to the mixture, and the mixture was heat-treated at 1,400°C for 2 hours and allowed to stand to room temperature to prepare a $CO_2$ immobilization material B having a Blaine specific surface area of 4,000 cm$^2$/g.

$CO_2$ immobilization material C: $\alpha$-CaO·SiO$_2$. Calcium carbonate with reagent grade 1 and silicon dioxide with reagent grade 1 were mixed at a molar ratio of 1:1, lithium carbonate with reagent grade 1 was further mixed such that the content of Li was 0.1% (internal replacement) in terms of oxide (Li$_2$O) with respect to the mixture, and the mixture was heat-treated at 1,500°C for 2 hours and allowed to stand to room temperature to prepare a $CO_2$ immobilization material C having a Blaine specific surface area of 4,000 cm$^2$/g.

$CO_2$ immobilization material D: 3CaO·MgO·2SiO$_2$. Calcium carbonate with reagent grade 1 and magnesium oxide with reagent grade 1, and silicon dioxide with reagent grade 1 were mixed at a molar ratio of 3:1:2, and lithium carbonate with reagent grade 1 was further mixed such that the content of Li was 0.1% (internal replacement) in terms of oxide (Li$_2$O) with respect to the mixture, and the mixture was heat-treated at 1,400°C for 2 hours and allowed to stand to room temperature to prepare a $CO_2$ immobilization material D having a Blaine specific surface area of 4,000 cm$^2$/g.

$CO_2$ immobilization material E: $\gamma$-2CaO·SiO$_2$. Calcium carbonate with reagent grade 1 and silicon dioxide with reagent grade 1 were mixed at a molar ratio of 2:1, heat-treated at 1,400°C for 2 hours, and allowed to stand to room temperature to prepare $\gamma$-2CaO·SiO$_2$ having a Blaine specific surface area of 4,000 cm$^2$/g.

$CO_2$ immobilization material F: Li$_2$O + $\gamma$-2CaO·SiO$_2$. Calcium carbonate with reagent grade 1 and silicon dioxide with reagent grade 1 were mixed at a molar ratio of 2:1, heat-treated at 1,400°C for 2 hours, and allowed to stand to room temperature to prepare $\gamma$-2CaO·SiO$_2$ having a Blaine specific surface area of 4,000 cm$^2$/g.

Further, lithium carbonate with reagent grade 1 was heat-treated at 1,400°C for 2 hours and allowed to stand to room temperature to prepare $Li_2O$ powder.

$Li_2O$ powder (obtained by heat-treating lithium carbonate with reagent grade 1 at 1,400°C for 2 hours) was internally mixed with $\gamma$-$2CaO·SiO_2$ such that $Li_2O$ was 0.1% (internal replacement) to prepare a $CO_2$ immobilization material F.

Note that the content of Li in terms of oxide in each $CO_2$ immobilization material was measured with an ICP emission spectrometer (VISTA-PRO, manufactured by Hitachi High-Tech Science Corporation). Then, from an absolute calibration curve method using a diluted mixed solution for XSTC-22 ICP manufactured by SPEX CertiPrep, it is confirmed that the content of Li is the same as the charged amount. Note that the measurement conditions are as follows.

Li measurement wave length: 670.783 nm
BG correction: fitting curve method
Standard solution for calibration curve: a mixed solution for XSTC-22 ICP manufactured by SPEX CertiPrep was diluted and used

Calibration curve range: 0 to 5 mg/L (5-point calibration curve of 0 mg/L, 0.1 mg/L, 0.5 mg/L, 1 mg/L, and 5 mg/L)

- Quantification by absolute calibration curve method

25 g of each of the $CO_2$ immobilization materials A to F was placed in a plastic cup and carbonation was performed in a chamber with a constant temperature and a constant humidity under conditions of 20°C, 80% RH, and a carbon dioxide concentration of 20% by volume.

The mass of the sample dried at 105°C for 24 hours after carbonation for each predetermined period shown in Table 1 was measured, and the carbonation rate was calculated from the mass change before and after carbonation by the above-described Formula (1). The results are shown in Table 1.

[Table 1]

| | | Carbonation Rate [%] | | | Remarks |
|---|---|---|---|---|---|
| | | 1 Day | 3 Days | 7 Days | |
| Immobilization Material A | $\gamma$-$2CaO·SiO_2$ ($Li_2O$ 0.1%) | 24.8 | 47.4 | 49.0 | Example |
| Immobilization Material B | $3CaO·2SiO_2$ ($Li_2O$ 0.1%) | 21.9 | 41.0 | 42.3 | Example |
| Immobilization Material C | $\alpha$-$CaO·SiO_2$ ($Li_2O$ 0.1%) | 22.4 | 43.6 | 46.9 | Example |
| Immobilization Material D | $3CaO·MgO·2SiO_2$ ($Li_2O$ 0.1%) | 18.0 | 39.9 | 40.9 | Example |
| Immobilization Material E | $\gamma$-$2CaO·SiO_2$ | 10.5 | 30.1 | 30.7 | Comparative Example |
| Immobilization Material F | $Li_2O$ + $\gamma$-$2CaO·SiO_2$ | 11.1 | 29.7 | 31.9 | Comparative Example |

[Experimental Example 2]

$CO_2$ immobilization materials A-1 to A-7 and $CO_2$ immobilization materials C-1 to C-7 were prepared in the same manner as in the $CO_2$ immobilization material A and immobilization material C in Experiment 1, except that lithium carbonate with reagent grade 1 was mixed such that the content percentage of Li was 0.0005%, 0.002%, 0.006%, 0.1%, 0.15%, 0.8%, 0.9%, 1.0%, and 1.1% (internal replacement, respectively), in terms of oxide ($Li_2O$) with respect to the mixture, in the production of each of the $CO_2$ immobilization material A and immobilization material C in Experiment 1. Each of the $CO_2$ immobilization material was evaluated as similar to that in Experiment 1. The results are shown in Table 2.

[Table 2]

| | | Carbonation Rate [%] | | | Remarks |
|---|---|---|---|---|---|
| | | 1 Day | 3 Days | 7 Days | |
| Immobilization Material A-0 | $\gamma$-$2CaO·SiO_2$ ($Li_2O$ 0.0005%) | 9.9 | 28.8 | 30.2 | Comparative Example |
| Immobilization Material A-1 | $\gamma$-$2CaO·SiO_2$ ($Li_2O$ 0.002%) | 20.1 | 37.5 | 39.8 | Example |

(continued)

| | | Carbonation Rate [%] | | | Remarks |
|---|---|---|---|---|---|
| | | 1 Day | 3 Days | 7 Days | |
| Immobilization Material A-2 | $\gamma$-2CaO·SiO$_2$ (Li$_2$O 0.006%) | 20.7 | 37.9 | 41.8 | Example |
| Immobilization Material A | $\gamma$-2CaO·SiO$_2$ (Li$_2$O 0.1%) | 24.8 | 47.4 | 49.0 | Example |
| Immobilization Material A-3 | $\gamma$-2CaO·SiO$_2$ (Li$_2$O 0.15%) | 25.1 | 48.1 | 49.1 | Example |
| Immobilization Material A-4 | $\gamma$-2CaO·SiO$_2$ (Li$_2$O 0.8%) | 21.9 | 40.2 | 42.1 | Example |
| Immobilization Material A-5 | $\gamma$-2CaO·SiO$_2$ (Li$_2$O 0.9%) | 20.9 | 38.9 | 38.8 | Example |
| Immobilization Material A-6 | $\gamma$-2CaO·SiO$_2$ (Li$_2$O 1.0%) | 20.8 | 34.9 | 38.7 | Example |
| Immobilization Material A-7 | $\gamma$-2CaO·SiO$_2$ (Li$_2$O 1.1%) | 15.1 | 27.4 | 31.1 | Comparative Example |
| Immobilization Material C-0 | $\alpha$-CaO·SiO$_2$ (Li$_2$O 0.0005%) | 9.3 | 27.1 | 29.4 | Comparative Example |
| Immobilization Material C-1 | $\alpha$-CaO·SiO$_2$ (Li$_2$O 0.002%) | 18.7 | 34.7 | 38.7 | Example |
| Immobilization Material C-2 | $\alpha$-CaO·SiO$_2$ (Li$_2$O 0.006%) | 19.2 | 40.2 | 42.6 | Example |
| Immobilization Material C | $\alpha$-CaO·SiO$_2$ (Li$_2$O 0.1%) | 22.4 | 43.6 | 46.9 | Example |
| Immobilization Material C-3 | $\alpha$-CaO·SiO$_2$ (Li$_2$O 0.15%) | 25.9 | 41.3 | 44.4 | Example |
| Immobilization Material C-4 | $\alpha$-CaO·SiO$_2$ (Li$_2$O 0.8%) | 22.2 | 39.1 | 40.9 | Example |
| Immobilization Material C-5 | $\alpha$-CaO·SiO$_2$ (Li$_2$O 0.9%) | 21.9 | 36.4 | 39.7 | Example |
| Immobilization Material C-6 | $\alpha$-CaO·SiO$_2$ (Li$_2$O 1.0%) | 21.1 | 36.8 | 39.1 | Example |
| Immobilization Material C-7 | $\alpha$-CaO·SiO$_2$ (Li$_2$O 1.1%) | 14.9 | 28.1 | 31.3 | Comparative Example |

[Experimental Example 3]

CO$_2$ immobilization materials G to I were prepared as described below.

CO$_2$ immobilization material G: Calcium carbonate with reagent grade 1 and silicon dioxide with reagent grade 1 were mixed at a CaO/SiO$_2$ molar ratio of 1.2, lithium carbonate with reagent grade 1 was further mixed such that the content of Li was 0.1% (internal replacement) in terms of oxide (Li$_2$O) with respect to the mixture, heat-treated at 1,400°C for 2 hours, and allowed to stand to room temperature to prepare a CO$_2$ immobilization material G having a Blaine specific surface area of 4,000 cm$^2$/g.

CO$_2$ immobilization material H: Calcium carbonate with reagent grade 1 and silicon dioxide with reagent grade 1 were mixed at a CaO/SiO$_2$ molar ratio of 1.8, lithium carbonate with reagent grade 1 was further mixed such that the content of Li was 0.1% (internal replacement) in terms of oxide (Li$_2$O) with respect to the mixture, heat-treated at 1,400°C for 2 hours, and allowed to stand to room temperature to prepare a CO$_2$ immobilization material H having a Blaine specific area of 4,000 cm$^2$/g.

CO$_2$ immobilization material I: Calcium carbonate with reagent grade 1 and silicon dioxide with reagent grade 1 were mixed at a CaO/SiO$_2$ molar ratio of 2.3, lithium carbonate with reagent grade 1 was further mixed such that the content of Li was 0.1% (internal replacement) in terms of oxide (Li$_2$O) with respect to the mixture, heat-treated at 1,400°C for 2 hours, and allowed to stand to room temperature to prepare a CO$_2$ immobilization material I having a Blaine specific surface area of 4,000 cm$^2$/g.

The prepared CO$_2$ immobilization material was subjected to powder X-ray diffraction measurement. The measurement results were analyzed with quantitative software to determine the mineral composition. A fully automatic multi-purpose X-ray diffractometer "SmartLab" manufactured by Rigaku Corporation was used as the powder X-ray diffractometer, and "SmartlabStudio II" manufactured by Rigaku Corporation was used as the quantitative software.

The carbonation rate of each CO$_2$ immobilization material prepared in the same manner as in Experimental Example 1 was calculated. The results are shown in Table 3.

[Table 3]

| | CaO/SiO$_2$ Molar Ratio | Mineral Composition | Carbonation Rate [%] | | | Remarks |
|---|---|---|---|---|---|---|
| | | | 1 Day | 3 Days | 7 Days | |
| Immobilization Material G | 1.2 (Li$_2$O 0.1%) | $\alpha$-CaO·SiO$_2$ 57%<br>3CaO·2SiO$_2$ 43% | 22.9 | 41.6 | 43.4 | Example |
| Immobilization Material H | 1.8 (Li$_2$O 0.1%) | $\gamma$-2CaO·SiO$_2$ 64%<br>3CaO·2SiO$_2$ 36% | 24.5 | 47.9 | 48.4 | Example |
| Immobilization Material I | 2.3 (Li$_2$O 0.1%) | $\gamma$-2CaO·SiO$_2$ 65%<br>3CaO·2SiO$_2$ 35% | 23.6 | 47.2 | 47.9 | Example |

[Experimental Example 4]

Carbonation was performed and the carbonation rate was calculated in the same manner as in Experimental Example 1 except that various auxiliary agents were added and mixed so as to be a predetermined proportion shown in Table 3 with respect to 100 parts by mass of the CO$_2$ immobilization material A. The results are shown in Table 4.

Table 4]

| | Auxiliary Agent | | Carbonation Rate [%] | | Remarks |
|---|---|---|---|---|---|
| | Kind | Addition Amount (Parts by Mass) | 1 Day | 3 Days | |
| Immobilization Material A | None | 0 | 24.8 | 47.4 | Example |
| | Trehalose | 1 | 49.1 | 65.4 | Example |
| | Trehalose | 5 | 65.1 | 73.5 | Example |
| | Sucrose | 1 | 52.8 | 61.1 | Example |
| | Sucrose | 5 | 52.9 | 60.0 | Example |
| | Maltose | 1 | 50.6 | 60.7 | Example |
| | Maltose | 5 | 51.3 | 61.7 | Example |
| | Dextrin | 1 | 48.0 | 60.5 | Example |
| | Dextrin | 5 | 47.8 | 59.7 | Example |

[Experimental Example 5]

Carbonation was performed and the carbonation rate was calculated in the same manner as in Experimental Example 1 except that the CO$_2$ immobilization material A was used, and the carbonation in the chamber with the constant temperature and the constant humidity was changed from 20°C and 80% RH to the conditions shown in Table 5. The results are shown in Table 5.

[Table 5]

| | Carbonation Condition | | Carbonation Rate [%] | | | Remarks |
|---|---|---|---|---|---|---|
| | | | Carbonation First Day | Carbonation Third Day | Carbonation Seventh Day | |
| Immobilization Material A | 20°C | 80% RH | 24.8 | 47.4 | 49.0 | Example |
| | 20°C | 60% RH | 25.0 | 49.7 | 51.4 | Example |
| | 40°C | 60% RH | 26.9 | 48.6 | 50.1 | Example |

From the results of Table 1, it can be seen that the $CO_2$ immobilization material of the present invention has a high carbonation rate.

From the results shown in Table 2, a high carbonation rate was obtained when the content of Li was 0.001 to 1.0% by mass in terms of oxide ($Li_2O$).

From the results of Table 3, a favorable carbonation rate was obtained when the $CaO/SiO_2$ molar ratio was 1.0 to 2.3.

From the results of Table 4, the carbonation effect was large when the disaccharide was added. In particular, when trehalose was added, the carbonation effect was further increased.

From the results of Table 5, a good carbonation rate was obtained by performing the carbonation at 75°C or less and/or 50% RH or more.

[Experimental Example 6]

Carbonation was performed and the carbonation rate was calculated in the same manner as in Experimental Example 1 except that various auxiliary agents were added and mixed so as to be the predetermined proportion shown in Table 6 with respect to 100 parts by mass of the $CO_2$ immobilization material E. The results are shown in Table 6.

[Table 6]

| | Auxiliary Agent | | Carbonation Rate [%] | | Remarks |
|---|---|---|---|---|---|
| | Kind | Addition Amount (Parts by Mass) | 1 Day | 3 Days | |
| Immobilization Material E | None | 0 | 10.5 | 30.1 | Comparative Example |
| | Trehalose | 1 | 41.6 | 50.7 | Example |
| | Trehalose | 5 | 44.6 | 59.4 | Example |
| | Sucrose | 1 | 36.7 | 46.7 | Example |
| | Sucrose | 5 | 37.1 | 48.7 | Example |
| | Maltose | 1 | 39.5 | 50.4 | Example |
| | Maltose | 5 | 38.9 | 53.4 | Example |
| | Dextrin | 1 | 37.4 | 51.7 | Example |
| | Dextrin | 5 | 39.8 | 52.0 | Example |

From the results of Table 6, the effect of carbonation was large when the disaccharide was added. In particular, when trehalose was added, the carbonation effect was further increased.

Industrial Applicability

$CO_2$ can be immobilized by carbonating the $CO_2$ immobilization material of the present invention at a temperature of 75°C or lower and/or a humidity of 50% RH or higher. In addition, the $CO_2$ immobilization product obtained by carbonating the $CO_2$ immobilization material can be used, for example, as a cement additive in the civil engineering and construction fields and the like, and can be effectively used as materials such as an aggregate for mortar and concrete, a roadbed material, a banking material, and a backfill material.

**Claims**

1. A $CO_2$ immobilization material comprising one kind or two or more kinds of non-hydraulic compound selected from the group consisting of $\gamma$-$2CaO \cdot SiO_2$, $3CaO \cdot 2SiO_2$, $\alpha$-$CaO \cdot SiO_2$, and calcium magnesium silicate, wherein the $CO_2$ immobilization material contains Li, and a content percentage of the Li is 0.001 to 1.0% by mass in terms of oxide.

2. A $CO_2$ immobilization material comprises one kind or two or more kinds of non-hydraulic compound selected from the group consisting of $\gamma$-$2CaO \cdot SiO_2$, $3CaO \cdot 2SiO_2$, $\alpha$-$CaO \cdot SiO_2$ and calcium magnesium silicate; and a disaccharide.

3. The $CO_2$ immobilization material according to claim 1 or 2, wherein a molar ratio of $CaO/SiO_2$ in the non-hydraulic compound is 0.8 to 2.3.

4. The $CO_2$ immobilization material according to claim 1, further comprising a disaccharide.

5. The $CO_2$ immobilization material according to claim 2 or 4, wherein the disaccharide is contained in an amount of 0.5 to 10 parts by mass with respect to 100 parts by mass of the $CO_2$ immobilization material.

6. The $CO_2$ immobilization material according to any one of claims 2, 4, and 5, wherein the disaccharide comprises trehalose.

7. A method for producing a $CO_2$ immobilization product, comprising subjecting the $CO_2$ immobilization material according to any one of claims 1 to 6 to carbonation treatment at 75°C or lower and/or 50% RH or higher.

<table>
<tr><td colspan="2" align="center">**INTERNATIONAL SEARCH REPORT**</td><td>International application No.<br><br>**PCT/JP2022/037817**</td></tr>
</table>

**A.    CLASSIFICATION OF SUBJECT MATTER**

*B01J 20/10*(2006.01)i; *B01D 53/14*(2006.01)i; *C01B 32/50*(2017.01)i; *C01B 33/24*(2006.01)i
FI:    B01J20/10 C; C01B32/50; C01B33/24 101; B01D53/14 100

According to International Patent Classification (IPC) or to both national classification and IPC

**B.    FIELDS SEARCHED**

Minimum documentation searched (classification system followed by classification symbols)

B01J20/10; B01D53/14; C01B32/50; C01B33/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2004-051421 A (DENKI KAGAKU KOGYO KK) 19 February 2004 (2004-02-19) | 1-7 |
| A | JP 2001-276566 A (HOKKAIDO ELECTRIC POWER CO INC) 09 October 2001 (2001-10-09) | 1-7 |
| A | JP 2006-131474 A (DENKI KAGAKU KOGYO KK) 25 May 2006 (2006-05-25) | 1-7 |
| A | CN 111974344 A (UNIV SHANGHAI) 24 November 2020 (2020-11-24) | 1-7 |
| A | CN 109621891 A (UNIV HUAZHONG SCIENCE TECH) 16 April 2019 (2019-04-16) | 1-7 |
| A | WO 1991/004225 A1 (JAPAN INSULATION CO., LTD.) 04 April 1991 (1991-04-04) | 1-7 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/037817**

| Patent document cited in search report | | | Publication date (day/month/year) | Patent family member(s) | | | Publication date (day/month/year) |
|---|---|---|---|---|---|---|---|
| JP | 2004-051421 | A | 19 February 2004 | (Family: none) | | | |
| JP | 2001-276566 | A | 09 October 2001 | WO | 2001/074474 | A1 | |
| | | | | AU | 4464801 | A | |
| JP | 2006-131474 | A | 25 May 2006 | (Family: none) | | | |
| CN | 111974344 | A | 24 November 2020 | (Family: none) | | | |
| CN | 109621891 | A | 16 April 2019 | (Family: none) | | | |
| WO | 1991/004225 | A1 | 04 April 1991 | JP | 6-99139 | B2 | |
| | | | | US | 5370852 | A | |
| | | | | EP | 445301 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020015659 A